# EUROPEAN PATENT APPLICATION

(11) **EP 4 694 485 A1**
(43) Date of publication of application: **11.02.2026**
(21) Application number: 23935959.9
(22) Date of filing: 06.05.2023
(51) Int. Cl.: H04W 72/231, G06F 9/50

(54) **COMPUTING-POWER SCHEDULING METHOD AND APPARATUS**

(71) Applicant: Huawei Technologies Co., Ltd., Shenzhen, Guangdong 518129 (CN)
(72) Inventor: WANG, Jun, Shenzhen, Guangdong 518129 (CN); PENG, Chenghui, Shenzhen, Guangdong 518129 (CN); WANG, Enbo, Shenzhen, Guangdong 518129 (CN); LI, Fangfang, Shenzhen, Guangdong 518129 (CN); LIU, Zhe, Shenzhen, Guangdong 518129 (CN); WANG, Fei, Shenzhen, Guangdong 518129 (CN); HUANG, Huanhuan, Shenzhen, Guangdong 518129 (CN)
(74) Representative: Thun, Clemens
(86) International application number: PCT/CN2023/092548
(87) International publication number: WO 2024/229630

(57) **Abstract**

This application provides a computing power scheduling method, including: A first device obtains a computing power resource request, where the computing power resource request is from an access stratum AS, a non-access stratum NAS, or an application layer of the first device; the first device generates computing power request information based on the computing power resource request, where the computing power request information is used to request to allocate a computing power resource to the first device. A UE sends radio signaling to a network side, so that the network side schedules a computing power resource based on the signaling and allocates the computing power resource to the UE, thereby implementing computing power sharing and scheduling in a wireless network.

## Description

### TECHNICAL FIELD

This application relates to the communication field, and specifically, to a computing power scheduling method and an apparatus.

### BACKGROUND

Cloud computing aims to integrate a plurality of low-cost computing entities into a perfect system with powerful computing capabilities through a network. A core concept of the cloud computing is to continuously improve processing capabilities of "clouds" to reduce processing load of user terminals, so that the user terminals are finally simplified into pure input/output devices, and can enjoy powerful computing processing capabilities of the "clouds" on demand. A core idea of the cloud computing is to manage and schedule, in a unified manner, a large quantity of computing resources connected through a network, to form a computing resource pool to provide services for users on demand. Therefore, how to quickly and appropriately share and schedule network resources is a key problem to be resolved in the cloud computing.

With emergence of services with a large computing amount such as ultra-large artificial intelligence (Artificial Intelligence, AI) models and extended reality (Extended Reality, XR), single-point computing bottlenecks may gradually emerge on both network side devices and terminal devices. Therefore, supporting computing power sharing in a wireless network is a future trend. For example, for network computing bottlenecks, as universal user equipments (User Equipment, UE) are introduced (for example, vehicle terminals supporting different levels of autonomous driving have different levels of computing power capabilities), UE-side terminals may perform sharing with a network side, to assist in network computing; and if XR-type terminals have insufficient computing power or heavy load, the terminals may request a network to assist in computing.

To support the foregoing computing power sharing in the wireless network, wireless standards are needed for supporting computing power sharing and definition of standards interfaces, so as to support computing power request and scheduling. Conventional communication systems (2G to 5G) only schedule and use connection resources. Scheduling and usage of computing power resources are internal implementation issues and are not discussed in standards. In the cloud computing, functions such as computing power sharing and computing power scheduling corresponding to distributed computing are supported, but are generally in a cloud network and implemented and deployed based on a fixed network. For example, generally, a plurality of computing nodes are centrally managed and scheduled by a unified node that is used for centralized management and control.

The cloud network supports simple computing power sharing and scheduling, but a fixed network-based method of the cloud network cannot be reused in the wireless network. In particular, computing power sharing and scheduling for an air interface need to be specially designed, and are not supported in existing technical solutions.

### SUMMARY

This application provides a computing power scheduling method and an apparatus. In a scenario in which a UE has computing power, and a network centrally manages and schedules the computing power of the UE, or a scenario in which a network has computing power, and a UE requests the computing power from the network to assist the UE in performing computing, the UE sends radio signaling to a network side, so that the network side schedules a computing power resource based on the signaling and allocates the computing power resource to the UE, thereby implementing computing power sharing and scheduling in a wireless network.

According to a first aspect, a computing power scheduling method is provided. The method may be performed by an electronic device, or may be performed by a chip or a circuit configured in the electronic device. This is not limited in this application.

The method includes: A first device obtains a computing power resource request, where the computing power resource request is from an access stratum AS, a non-access stratum NAS, or an application layer of the first device; and the first device generates computing power request information based on the computing power resource request, where the computing power request information is used to request to allocate a computing power resource to the first device.

It should be understood that the electronic device in this application may be a terminal device or a network device.

With reference to the first aspect, in some implementations of the first aspect, the method further includes: The first device sends the computing power request information, where a manner of sending the computing power request information includes AS signaling or NAS signaling, and the AS signaling includes a scheduling request SR, a random access channel RACH, a buffer status report BSR, and radio resource control RRC signaling.

In a possible implementation, the computing power request information includes first parameter information, and the first parameter information includes one or more of a quality of service QoS parameter, a resource position parameter, and a resource size parameter of the computing power resource requested by the first device.

In a possible implementation, the method further includes: The first device receives allocation result information, where the allocation result information indicates an allocation result of the computing power resource requested to be allocated by using the computing power request information, and the allocation result includes all successfully allocated, all unsuccessfully allocated, or partially successfully allocated.

In a possible implementation, the method further includes: The first device receives computing power configuration information, where the computing power configuration information includes configuration information of a computing power resource allocated by the network device to the first device, and the computing power resource allocated by the network device to the first device includes a computing power resource of the first device and a computing power resource of the network device.

In a possible implementation, that the first device generates the computing power request information based on the computing power resource request includes: When a preset parameter meets a corresponding preset condition, the first device generates the computing power request information based on the computing power resource request, where the preset parameter includes at least one of the following parameters: a detection result of periodically detecting whether there is a computing power resource request, a total quantity of computing power resources in a computing power resource request, a quantity of computing power resource requests, a minimum latency of a computing power resource request, and a minimum value of a remaining latency of a computing power resource request.

In a possible implementation, when the computing power resource request is canceled, the method further includes: If the computing power request information has not been sent, the first device cancels sending of the computing power request information; or if the computing power request information has been sent, the first device generates cancellation request information, and sends the cancellation request information, where the cancellation request information is used to request to cancel allocation of a first computing power resource, and the first computing power resource is an entire or a part of the computing power resource requested to be allocated by using the computing power request information.

In a possible implementation, the computing power resource request is a computing power resource request from a first service, and the method further includes: determining, based on an identifier ID of the first service, the manner of sending the computing power request information.

In a possible implementation, the method further includes: determining, based on a QoS requirement of the computing power resource corresponding to the computing power resource request, the manner of sending the computing power request information.

In a possible implementation, the computing power configuration information includes resource constraint information, and the resource constraint information indicates that a part of the computing power resource allocated by the network device to the first device is allowed to be used for only a part of services.

In a possible implementation, the method further includes: The first device obtains a plurality of computing power resource requests; and the first device generates the computing power request information based on the plurality of computing power resource requests.

According to a second aspect, a computing power scheduling method is provided. The method may be performed by a network device, or may be performed by a chip or a circuit configured in the network device. This is not limited in this application.

The method includes: The network device receives computing power request information, where the computing power request information is used to request to allocate a computing power resource to a first device; the network device determines allocation result information, where the allocation result information indicates an allocation result of the computing power resource requested to be allocated by using the computing power request information, and the allocation result includes all successfully allocated, all unsuccessfully allocated, or partially successfully allocated; and the network device sends the allocation result information.

In a possible implementation, the computing power request information includes first parameter information, and the first parameter information includes one or more of a quality of service QoS parameter, a resource position parameter, and a resource size parameter of the computing power resource requested by the first device.

In a possible implementation, the method further includes: The network device determines computing power configuration information, where the computing power configuration information includes configuration information of a computing power resource allocated by the network device to the first device, and the computing power resource allocated by the network device to the first device includes a computing power resource of the first device and a computing power resource of the network device; and sends the computing power configuration information.

In a possible implementation, the computing power configuration information includes resource constraint information, and the resource constraint information indicates that a part of the computing power resource allocated by the network device to the first device is allowed to be used for only a part of services.

According to a third aspect, a communication apparatus is provided, including: a processing module, configured to obtain a computing power resource request, where the computing power resource request is from an access stratum AS, a non-access stratum NAS, or an application layer of a first device, and the processing module is further configured to generate computing power request information based on the computing power resource request, where the computing power request information is used to request to allocate a computing power resource to the first device.

In a possible implementation, the apparatus further includes: a sending module, configured to send the computing power request information, where a manner of sending the computing power request information includes AS signaling or NAS signaling, and the AS signaling includes a scheduling request SR, a random access channel RACH, a buffer status report BSR, or radio resource control RRC signaling.

In a possible implementation, the apparatus further includes: a receiving module, configured to receive allocation result information, where the allocation result information indicates an allocation result of the computing power resource requested to be allocated by using the computing power request information, and the allocation result includes all successfully allocated, all unsuccessfully allocated, or partially successfully allocated.

In a possible implementation, the receiving module is further configured to receive computing power configuration information, where the computing power configuration information includes configuration information of a computing power resource allocated by a network device to the first device, and the computing power resource allocated by the network device to the first device includes a computing power resource of the first device and a computing power resource of the network device.

In a possible implementation, that the processing module is further configured to generate the computing power request information based on the computing power resource request includes: When a preset parameter meets a corresponding preset condition, the processing module is further configured to generate the computing power request information based on the computing power resource request, where the preset parameter includes at least one of the following parameters: a detection result of periodically detecting whether there is a computing power resource request, a total quantity of computing power resources in a computing power resource request, a quantity of computing power resource requests, a minimum latency of a computing power resource request, and a minimum value of a remaining latency of a computing power resource request.

In a possible implementation, when the computing power resource request is canceled, if the computing power request information has not been sent, the sending module cancels sending of the computing power request information; or if the computing power request information has been sent, the processing module is further configured to generate cancellation request information, and the sending module is further configured to send the cancellation request information, where the cancellation request information is used to request to cancel allocation of a first computing power resource, and the first computing power resource is an entire or a part of the computing power resource requested to be allocated by using the computing power request information.

In a possible implementation, the computing power resource request is a computing power resource request from a first service, and the sending module is further configured to determine, based on an identifier ID of the first service, the manner of sending the computing power request information.

In a possible implementation, the sending module is further configured to determine, based on a QoS requirement of the computing power resource corresponding to the computing power resource request, the manner of sending the computing power request information.

In a possible implementation, the computing power configuration information includes resource constraint information, and the resource constraint information indicates that a part of the computing power resource allocated by the network device to the first device is allowed to be used for only a part of services.

In a possible implementation, the processing module obtains a plurality of computing power resource requests, and generates the computing power request information based on the plurality of computing power resource requests.

According to a fourth aspect, a communication apparatus is provided, including: a receiving module, configured to receive computing power request information, where the computing power request information is used to request to allocate a computing power resource to a first device; a processing module, configured to determine allocation result information, where the allocation result information indicates an allocation result of the computing power resource requested to be allocated by using the computing power request information, and the allocation result includes all successfully allocated, all unsuccessfully allocated, or partially successfully allocated; and a sending module, configured to send the allocation result information.

In a possible implementation, the processing module is further configured to determine computing power configuration information, where the computing power configuration information includes configuration information of a computing power resource allocated by the network device to the first device, and the computing power resource allocated by the network device to the first device includes a computing power resource of the first device and a computing power resource of the network device; and the sending module is further configured to send the computing power configuration information.

In a possible implementation, the computing power configuration information includes resource constraint information, and the resource constraint information indicates that a part of the computing power resource allocated by the network device to the first device is allowed to be used for only a part of services.

According to a fifth aspect, a communication apparatus is provided, including modules or units configured to perform the method according to any one of the first aspect or the possible implementations of the first aspect.

According to a sixth aspect, a communication apparatus is provided, including modules or units configured to perform the method according to any one of the second aspect or the possible implementations of the second aspect.

According to a seventh aspect, a communication device is provided, including a processor. The processor is coupled to a storage, and may be configured to execute instructions in the storage, to implement the method according to the first aspect and the possible implementations of the first aspect. In a possible implementation, the communication device further includes the storage. In a possible implementation, the communication device further includes a communication interface, and the processor is coupled to the communication interface. In a possible implementation, a transceiver may be a transceiver circuit. In a possible implementation, an input/output interface may be an input/output circuit.

In an implementation, the communication device is a terminal device or a network device. When the communication device is the terminal device or the network device, the communication interface may be a transceiver or an input/output interface. In a possible implementation, the transceiver may be a transceiver circuit. In a possible implementation, the input/output interface may be an input/output circuit.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to an eighth aspect, a communication device is provided, including a processor. The processor is coupled to a storage, and may be configured to perform the method according to the second aspect and the possible implementations of the second aspect. In a possible implementation, the communication device further includes the storage. In a possible implementation, the communication device further includes a communication interface, and the processor is coupled to the communication interface. In a possible implementation, the communication device further includes a communication interface, and the processor is coupled to the communication interface.

In an implementation, the communication device is a network device. When the communication device is the network device, the communication interface may be a transceiver or an input/output interface.

In another implementation, the communication device is a chip or a chip system. When the communication device is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a ninth aspect, a communication apparatus is provided, including an input circuit, an output circuit, and a processing circuit. The processing circuit is configured to receive a signal through the input circuit, and transmit a signal through the output circuit, to implement the method according to any aspect of the first aspect or the second aspect and any one of the possible implementations of the aspects.

In a specific implementation process, the communication apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, and a signal output by the output circuit may be output to and transmitted by, for example, but not limited to, a transmitter. The input circuit and the output circuit may be different circuits or may be a same circuit, and in this case, the circuit is used as the input circuit and the output circuit respectively at different moments. Specific implementations of the processor and the various circuits are not limited in embodiments of this application.

According to a tenth aspect, a processing apparatus is provided, including a processor and a storage. The processor is configured to: read instructions stored in the storage, receive a signal through a receiver, and transmit a signal through a transmitter, to perform the method according to any aspect of the first aspect or the second aspect and any one of the possible implementations of the aspects.

In a possible implementation, there are one or more processors, and there are one or more storages.

In a possible implementation, the storage may be integrated with the processor, or the storage may be disposed separately from the processor.

In a specific implementation process, the storage may be a non-transitory (non-transitory) storage, for example, a read-only memory (read-only memory, ROM). The storage and the processor may be integrated into one chip, or may be separately disposed on different chips. A type of the storage and a manner in which the storage and the processor are disposed are not limited in embodiments of this application.

It should be understood that, a related data exchange process, for example, sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processor in the foregoing aspect may be a chip, and the processor may be implemented by using hardware or software. When the processor is implemented by using the hardware, the processor may be a logic circuit, an integrated circuit, or the like; and when the processor is implemented by using the software, the processor may be a general-purpose processor, and is implemented by reading software code stored in the storage. The storage may be integrated in the processor, or located outside the processor and exist independently.

According to an eleventh aspect, a processing apparatus is provided, including a communication interface and a processing circuit. The communication interface is configured to obtain to-be-processed data. The processing circuit is configured to process the to-be-processed data according to the method according to any one of the possible implementations of the first aspect.

According to a twelfth aspect, a processing apparatus is provided, including a communication interface and a processing circuit. The communication interface is configured to send indication information according to the method according to any one of the possible implementations of the second aspect. The processing circuit is configured to generate the indication information.

According to a thirteenth aspect, a computer program product is provided. The computer program product includes a computer program (which may also be referred to as code or instructions). When the computer program is run, a computer is caused to perform the method according to any aspect of the first aspect or the second aspect and any one of the possible implementations of the aspects.

According to a fourteenth aspect, a computer-readable medium is provided. The computer-readable medium stores a computer program (which may also be referred to as code or instructions). When the computer program is run on a computer, the computer is caused to perform the method according to any aspect of the first aspect or the second aspect and any one of the possible implementations of the aspects.

According to a fifteenth aspect, a chip system is provided, including a storage and a processor. The storage is configured to store a computer program, and the processor is configured to invoke the computer program from the storage and run the computer program, to cause a communication device in which the chip system is installed to perform the method according to any aspect of the first aspect or the second aspect and the possible implementations of the aspects.

The chip system may include an input circuit or interface configured to send information or data, and an output circuit or interface configured to receive information or data.

According to a sixteenth aspect, a communication system is provided, including the foregoing network device and electronic device.

In a possible design, the communication system may further include another device that interacts with a communication device in the solutions provided in embodiments of this application.

### BRIEF DESCRIPTION OF DRAWINGS

FIG. 1 is a diagram of an example of a communication system of a method according to this application;
FIG. 2 is a diagram of an example of a communication system architecture of a method according to this application;
FIG. 3 is a diagram of a communication method according to this application;
FIG. 4 is a schematic flowchart of a communication method according to this application;
FIG. 5 is a diagram of a communication model according to this application;
FIG. 6 is a diagram of a request information format according to this application;
FIG. 7 is a diagram of a method for selecting a manner of sending a resource according to this application;
FIG. 8 is a diagram of a communication model according to this application;
FIG. 9 is a block diagram of a communication apparatus according to an embodiment of this application;
FIG. 10 is a block diagram of another communication apparatus according to an embodiment of this application;
FIG. 11 is a block diagram of an electronic device according to an embodiment of this application; and
FIG. 12 is a block diagram of a network device according to an embodiment of this application.

### DESCRIPTION OF EMBODIMENT

The following describes technical solutions of this application with reference to accompanying drawings.

The technical solutions in embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a machine to machine (machine to machine, M2M) communication system, a non-terrestrial network (non-terrestrial network, NTN) system, a 5^{th} generation (5^{th} Generation, 5G) mobile communication system, a new radio (New Radio, NR) system, or a future wireless communication system.

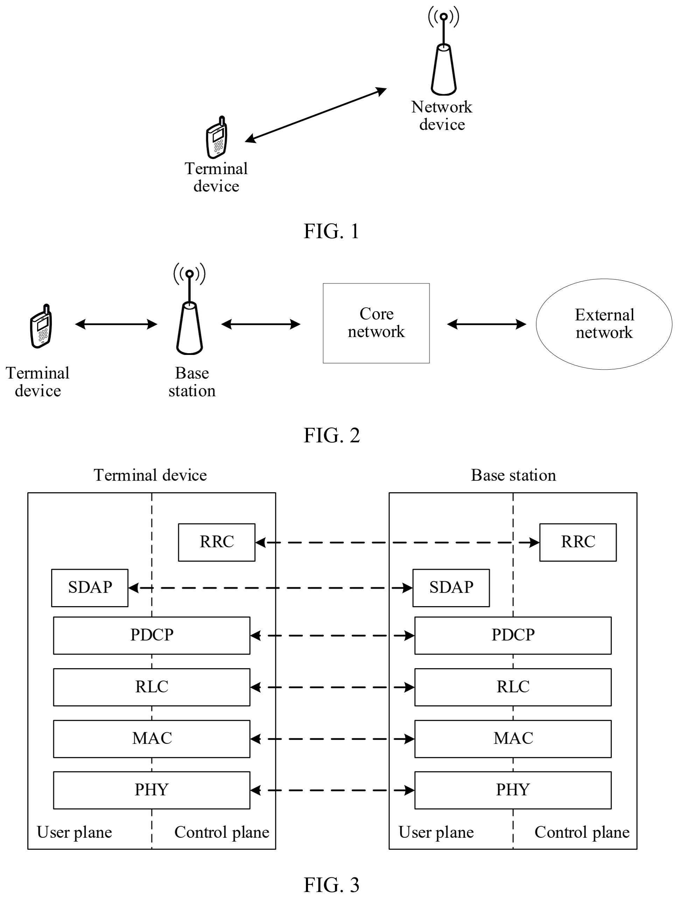

As shown in FIG. 1, the communication system may include at least one network device, for example, a network device shown in FIG. 1. The communication system may further include at least one terminal device, for example, a terminal device shown in FIG. 1. The network device may communicate with the terminal device through a radio link. In the communication system, the network device and the terminal device may perform wireless communication by using an air interface resource. The air interface resource may include at least one of a time domain resource, a frequency domain resource, a code resource, and a space resource.

The terminal device in embodiments of this application may also be referred to as a user equipment, an access terminal, a subscriber unit, a subscriber station, a mobile station, a remote station, a remote terminal, a mobile device, a user terminal, a terminal, a wireless communication device, a user agent, or a user apparatus. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a 5G network, a terminal device in a future evolved public land mobile network (Public Land Mobile Network, PLMN), or the like. This is not limited in embodiments of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

The user equipment, that is, the mobile station, may be a vehicle-mounted type, a portable type, a handheld type, or the like. A physical device and a mobile user may be completely independent of each other. All user-related information may be stored in a smart card (SIM card). The card may be used on the mobile station. The terminal may complete interaction with a base station through a direct air interface. The terminal may send a signal and/or receive a signal.

In addition, the terminal device may alternatively be a terminal device in an internet of things (internet of things, IoT) system. IoT is an important part of future information technology development. A main technical feature of the IoT is to connect an object to a network by using a communication technology, to implement an intelligent network for human-machine interconnection and thing-thing interconnection.

It should be understood that a specific form of the terminal device is not limited in this application.

The network device in embodiments of this application may be a device configured to communicate with the terminal device. The network device may be a base station (Base Transceiver Station, BTS) in a global system for mobile communications (Global System for Mobile communications, GSM) or code division multiple access (Code Division Multiple Access, CDMA), a base station (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a 5G network, a network device in a future evolved PLMN network, or the like. This is not limited in embodiments of this application.

It should be understood that the network device in a wireless communication system may be any device having a wireless transceiver function. The device includes but is not limited to: an evolved NodeB (evolved NodeB, eNB), a radio network controller (radio network controller, RNC), a road side unit (road side unit, RSU), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like, may be a gNB or a transmission point (TRP or TP) in a 5G (such as NR) system, one antenna panel or a group of antenna panels (including a plurality of antenna panels) of a base station in a 5G system, or may be a network node included in a gNB or a transmission point, for example, a baseband unit (BBU) or a distributed unit (distributed unit, DU). Alternatively, the network device may be a network side apparatus that provides a communication service or communication control for a terminal device in vehicle-to-everything.

The network device provides a communication service for a terminal device in a cell. The terminal device in the cell communicates with the network device by using a transmission resource (for example, a frequency domain resource or a time domain resource) allocated by the network device. The cell may belong to a macro base station (for example, a macro eNB or a macro gNB).

As shown in FIG. 2, a communication system architecture to which this application is applicable may include a base station, a terminal device, a core network, an external network, and the like.

Core network: is a core part of a mobile communication network, the core network plays a transition role, and is responsible for mobility management, session management, and data transmission (core functions) of terminal users. A 5G core network has three new enhancements based on an EPC: a service-based architecture, supporting for network slicing, and separation of a control plane and a user plane. Compared with a 4G core network, the 5G core network evolves to a separated architecture again. The first one is separation of network functions, where a design idea of cloud-native NFV is absorbed to establish a network in a software-based, modular, and service-based manner. The second one is separation of the control plane and the user plane, so that user plane functions are not restricted by "centralization", and can be flexibly deployed in both a core network and an access network.

Main functions of the core network are to provide a user connection, manage a user, and complete service carrying, and the core network serves as a bearer network to provide an interface to an external network. User connection establishment includes functions such as mobility management (MM, Mobility Management), call management (CM, Calling management), switching/routing, and recorded announcement (establishing a connection relationship with an intelligent network peripheral device in combination with an intelligent network service). User management mainly includes user descriptions, QoS (quality of service) (where descriptions of user service QoS are added), user communication accounting (Accounting), a VHE (virtual home environment virtual home environment) (providing a virtual home environment through a conversation with an intelligent platform), and security (where an authentication center provides corresponding security measures, including security management for mobile services and security processing for external network access). Bearer connection (Access to) includes an external PSTN (public switched telephone network, public switched telephone network), an external circuit data network and a packet data network, an internet (internet) and an intranet (intranet), and a mobile SMS (Short Message Service, short message service) server. A basic service that can be provided by the core network includes mobile office, e-commerce, communication, an entertainment service, travel and location-based services, a telemetry (Telemetry) service, a simple message transfer service (monitoring and control), or the like.

Simply speaking, a mobile network may be divided into three parts: a base station subsystem, a network subsystem, and a system support part, for example, security management. The core network is located in the network subsystem. The core network is mainly used to connect a call requests or a data request from an air interface to different networks.

External network: refers to an operator, a network management system, or the like, and is a network, that is, a public land mobile network (Public Land Mobile Network, PLMN), established and operated by a government or an operator, for example, a Mobile operator, a Unicom operator, or a Telecom operator, authorized by the government, to provide land mobile communication services for the public.

The terminal device in embodiments of this application is connected to a radio access network (radio access network, RAN) device in a wireless manner, and a radio access network element is connected to a core network device in a wireless or wired manner. The core network device and the radio access network element may be different and independent physical devices, functions of the core network device and logical functions of the radio access network element may be integrated into a same physical device, or some functions of the core network device and some functions of the radio access network element may be integrated into one physical device. The terminal may be located at a fixed location, or may be mobile.

As shown in FIG. 3, a terminal may include a physical layer (physical layer, PHY), a medium access control (Medium Access Control, MAC) layer, a radio link control (Radio link control, RLC) layer, a packet data convergence protocol (Packet Data Convergence Protocol, PDCP), radio resource control (Radio Resource Control, RRC), and a service data adaptation protocol (Service Data Adaptation Protocol, SDAP). The terminal may include a user plane (user plane) protocol and a control plane (control plane) protocol. A base station may include a user plane (user plane) protocol and a control plane (control plane) protocol. The layers of the terminal and the base station may be connected to each other to transfer information.

This application provides a computing power scheduling method and an apparatus. In a scenario in which a UE has computing power, and a network centrally manages and schedules the computing power of the UE, or a scenario in which a network has computing power, and a UE requests the computing power from the network to assist the UE in performing computing, the UE sends radio signaling to a network side, so that the network side schedules a computing power resource based on the signaling and allocates the computing power resource to the UE, thereby implementing computing power sharing and scheduling in a wireless network.

It should be understood that descriptions of specific scenarios in embodiments of this application are merely examples. In addition to the foregoing described application scenarios, the method provided in embodiments of this application is also applicable to an application scenario in which a similar problem exists.

In the descriptions of embodiments of this application, unless otherwise stated, "a plurality" or "a plurality of items" means two or more. In addition, "at least one" may be replaced with "one or more".

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

It should be understood that names of all nodes and messages in this application are merely names specified for ease of description in this application, and may be different in an actual network. It should not be understood that the names of all the nodes and the messages are limited in this application. On the contrary, any name that has a function that is the same as or similar to that of the node or the message used in this application is considered as a method or an equivalent replacement in this application, and falls within the protection scope of this application. Details are not described below again.

The following describes in detail a plurality of uplink scheduling methods provided in embodiments of this application with reference to the accompanying drawings.

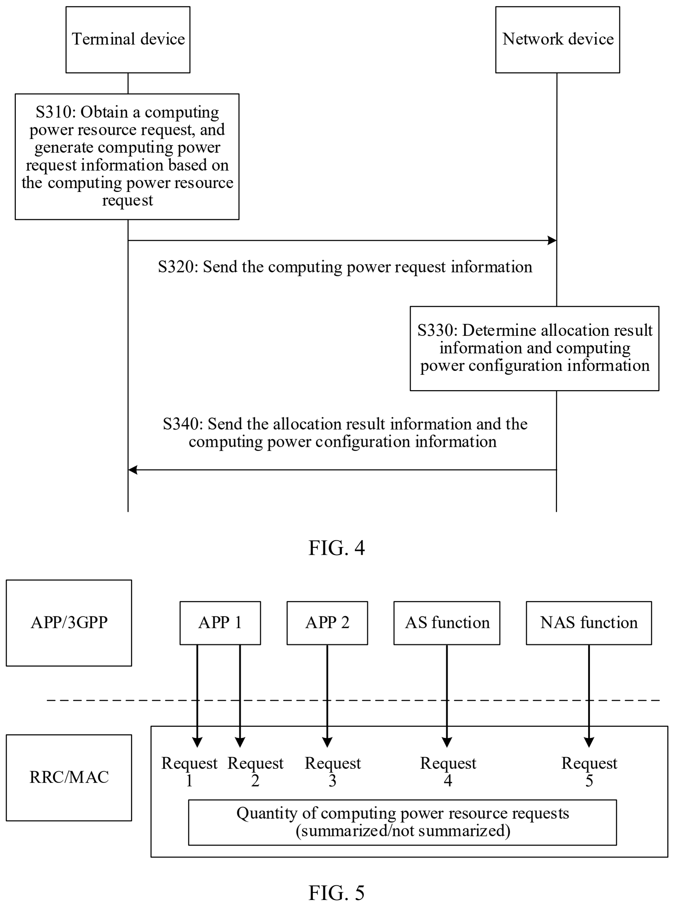

FIG. 4 shows a computing power scheduling method 300 according to this application. The method in FIG. 4 includes at least a part of the following content.

S310: A UE (that is, an example of a first device) obtains a computing power resource request, and generates computing power request information based on the computing power resource request.

S320: The UE sends the computing power request information to a network device, where the computing power request information is used to request to allocate a computing power resource to the UE.

S330: The network device determines allocation result information and computing power configuration information, where the allocation result information indicates an allocation status of the computing power resource.

S340: The network device sends the allocation result information and the computing power configuration information to the UE.

The following describes S310 to S340 in detail.

In S310, the UE obtains the computing power resource request, and generates the computing power request information based on the computing power resource request.

First, a new computing power model provided in this application is described.

In a conventional communication model, an application layer maps a to-be-sent data packet to different data radio bearers (DRB, Data Radio Bearer), and mapping is performed between each DRB and a logical channel (Logic Channel, LCH) (1:N mapping is performed for packet duplication (Packet Duplication), and 1:1 mapping is performed for packet non-duplication (Non-duplication)). A MAC layer of the UE collects statistics on an amount of buffered data of each logical channel group (Logic Channel Group, LCG), and reports, by using buffer status report (BSR) signaling, the amount of buffered data to a network in an LCG manner (due to high signaling overheads caused because reporting needs to be performed separately for each LCH in LCH reporting, LCHs having similar quality of service (Quality of Service, QoS) requirements form one LCG, and one LCG reports only one amount of buffered data, thereby reducing signaling overheads).

The QoS requirement is a requirement on a QoS class. QoS is a network technology used to manage and optimize network traffic to ensure that different applications and services in a network can obtain appropriate guarantees of quality of service, such as bandwidth, latency, and packet loss rate. QoS classes are priorities of different applications and services. To be specific, different traffic in the network has different processing priorities and quality of service requirements. Therefore, different QoS classes need to be allocated to the traffic to ensure that transmission and processing of the traffic in the network can be provided with corresponding priorities and guarantees. The QoS classes generally include a plurality of classes, for example, three or more classes: high, medium, and low. A higher class indicates a higher requirement of the application or service on quality of service of the network, and a higher priority and bandwidth guarantee are needed.

For a computing power request, an existing communication model cannot be directly reused, because a computing power request message does not correspond to specific packet sending, the MAC layer cannot infer a size of the computing power request by collecting statistics on a size of a buffered packet of the computing power request message. In this case, the new computing power model needs to be designed. As shown in FIG. 5, the new computing power model is divided into two layers: an upper layer and a lower layer. The upper layer corresponds to an application (Application, APP) layer or a 3GPP layer, and is a requester of a computing power resource. The 3GPP layer may be specifically a non-access stratum (Non-Access Stratum, NAS) or an access stratum (Access Stratum, AS). The lower layer corresponds to an RRC layer or a MAC layer, and is a request message layer of the computing power resource. This layer summarizes computing power requests of various services (Service)/tasks (task), and sends a corresponding computing power resource request message to a network side. A sending manner includes an RRC manner/a MAC manner/a scheduling request (Scheduling Request, SR) manner/a random access channel (Random Access Channel, RACH) manner, or the like.

In addition, for a plurality of computing power requests of a same service (APP/Service/Task, for example, APP), or different computing power requests of different APPs, this layer may merge or do not merge the computing power requests. Merging means summing up the plurality of computing power requests and sending one message, that is, the plurality of computing power requests correspond to one piece of total computing power request information, and one piece of computing power request information carries a total computing power requirement. Not merging means sending a plurality of messages for the plurality of computing power requests, that is, the plurality of computing power requests correspond to a plurality of pieces of computing power request information, and each piece of computing power request information carries a computing power requirement of each computing power request.

In a conventional communication network, when a plurality of UEs simultaneously perform data transmission on a same network device, different services correspond to different latency requirements. To be specific, services of some UEs are latency-sensitive (for example, a URLLC service), and services of some UEs are latency-insensitive (for example, an eMBB service). Latency-sensitive means that a service of a UE has a high requirement on a network transmission latency, and data transmission and processing need to be completed within a short period of time. For example, services such as video livestreaming and online gaming are latency-sensitive. If the network transmission latency is excessively high, user experience is affected, and even the services cannot be normally performed.

Therefore, different services correspond to different latency requirements, in other words, different services have different QoS priorities. Therefore, in addition to requirements on a size and a position of the computing power resource, the computing power resource request further includes a QoS requirement.

In a possible implementation, the UE obtains one or more computing power resource requests from one or more services, where the computing power resource request includes at least one of a computing power resource size, a computing power resource position, and a QoS requirement.

Specifically, when one piece of computing power request information is generated based on one computing power resource request, corresponding to a case in which the RRC/MAC layer does not merge the computing power resource requests, the computing power resource request corresponds to one piece of computing power request information.

When one piece of computing power request information is generated based on a plurality of computing power resource requests, corresponding to a case in which the RRC/MAC layer merges the computing power resource requests, the plurality of computing power resource requests correspond to one piece of computing power request information.

The following describes several formats of the computing power request information by using an example in which the computing power request information is a computing power buffer status report (Computing Buffer Status Report, C-BSR).

When the RRC/MAC layer does not merge the computing power resource requests, one computing power resource request corresponds to one C-BSR. In this case, reporting may be performed per service/task (per service/task). This supports both long and short formats.

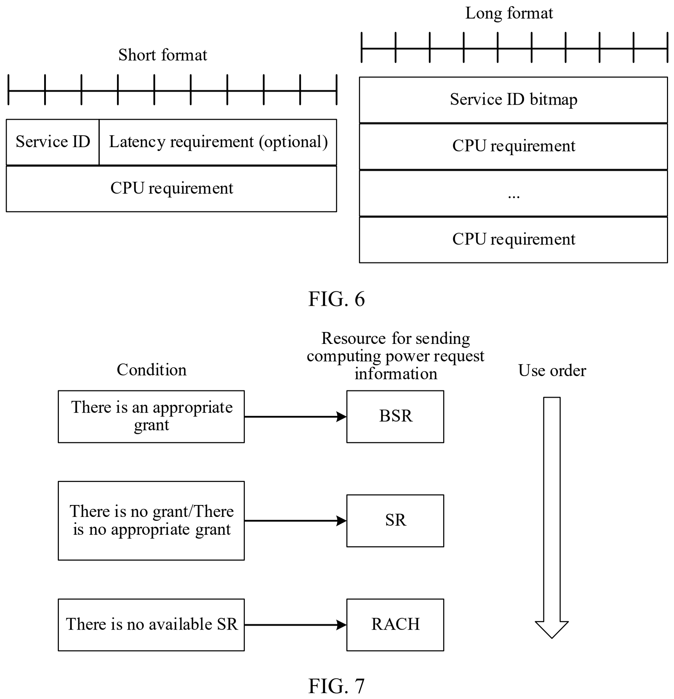

Short format: As shown in FIG. 6, a computing power requirement of only one service is reported at one time. In other words, one C-BSR corresponds to a computing power requirement of one service. In this case, the C-BSR may carry the following fields: service ID and size of a computing power resource.

In a possible implementation, the C-BSR may further carry "latency requirement", where a latency requirement is a QoS class requirement of the service corresponding to the C-BSR.

Long format: As shown in FIG. 6, computing power requirements of a plurality of services may be reported at one time. In other words, one C-BSR corresponds to computing power requirements of a plurality of services. In this case, the C-BSR may carry the following fields: service ID bitmap (bitmap) and size of a computing power resource requested for each service ID.

In a possible implementation, the C-BSR may further carry "latency requirement", where latency requirements are QoS class requirements of the plurality of services corresponding to the C-BSR.

When "latency requirement" is carried, request latencies of different computing power resources for a same service ID are allowed to be different. When "latency requirement" is not carried, different latency requirements for a same service ID cannot be distinguished, or the network considers by default that latency requirements of computing power resource requests for a same service ID are similar.

When the RRC/MAC layer merges the computing power resource requests, a plurality of computing power resource requests correspond to one piece of computing power request information. In this case, reporting may be performed per service group (service/task group). This also supports both long and short formats. Each service group includes one or more services.

Short format: A computing power requirement of only one service group is reported at one time. In other words, one C-BSR corresponds to a computing power requirement of one service group. Reference is made to the case in which the computing power resource requests are not merged, provided that the service ID field is replaced with a service group ID field.

In a possible implementation, the C-BSR may further carry "latency requirement", where a latency requirement is a QoS class requirement of the service corresponding to the C-BSR.

Long format: Computing power requirements of a plurality of service groups may be reported at one time. In other words, one C-BSR corresponds to computing power requirements of a plurality of service groups. In this case, the C-BSR may carry the following fields: service group ID bitmap (bitmap) and size of a computing power resource requested for each service group ID.

In a possible implementation, the C-BSR may further carry "latency requirement", where latency requirements are QoS class requirements of the plurality of service groups corresponding to the C-BSR.

When "latency requirement" is carried, request latencies of different computing power resources for a same service group ID are allowed to be different. When "latency requirement" is not carried, different latency requirements for a same service group ID cannot be distinguished, or the network considers by default that latency requirements of computing power resource requests for a same service group ID are similar.

In a possible implementation, that the UE groups a specific service into one service group needs to be preconfigured by the network. For example, the network configures a mapping relationship between the service and the service group for the UE.

In S320, the UE sends the computing power request information to the network device, where the computing power request information is used to request to allocate the computing power resource to the UE.

In this embodiment of this application, the computing power request information may be RRC layer information (for example, RRC signaling), or may be MAC layer information (for example, a BSR). When both an RRC manner and a MAC manner of requesting computing power are supported, which manner the UE is to select a problem that needs to be resolved in this embodiment of this application.

Specifically, application conditions of different request manners may be preconfigured for the UE by the network side (by using broadcast signaling such as a management information block (Master Information Block, MIB)/system information block (System Information Block, SIB), RRC dedicated signaling, or the like).

In a possible implementation, because a sending latency in the MAC manner is shorter than that in the RRC manner, the MAC manner may be used for an emergency service, and the RRC manner may be used for a non-emergency service. Specifically, the following two manners are included.

Manner 1: A manner of sending the computing power request information is determined based on an identifier ID of a service. For example, when a QoS requirement of a service is fixed, the network configures, for the UE, a mapping relationship between an ID of the service and a manner of reporting computing power request information. For example, a service 1 corresponds to RRC signaling, and a service 2 corresponds to a MAC CE.

Manner 2: A manner of sending the computing power request information is determined based on a QoS requirement of the computing power resource corresponding to the computing power resource request, where the manner includes: When the QoS requirement of the computing power resource is greater than a preset value, the computing power request information is sent by using RRC signaling; or when the QoS requirement of the computing power resource is less than the preset value, the computing power request information is sent by using MAC signaling.

When QoS requirements of different computing power resource requests of a service differ greatly, the network configures a latency threshold for the UE. For example, when a latency requirement is less than the latency threshold, the computing power request information is sent by using the MAC layer information. When a latency requirement is not less than the latency threshold, the computing power request information is sent by using the RRC layer information. In this case, for a same service, when latency requirements of different computing power resource requests differ greatly, different forms of computing power request information may be used for reporting.

There are two types of computing power resources requested by the UE from the network: one-time computing power and periodic computing power. For request messages for different types of computing power resources, the following parameter information (that is, first parameter information) is carried separately:

### (1) One-time computing power resource

When the computing power resource requested by the UE from the network is a one-time computing power resource, the computing power request information may carry one or more of the following parameters: QoS parameter, resource position parameter, and resource size parameter.

### (a) QoS parameter

The QoS parameter includes latency requirement (which is a computing latency requirement), reliability requirement (which is a computing QoS requirement), and the like.

It should be understood that the latency requirement and the computing latency requirement are both related to time, but have different meanings.

The latency requirement is time from sending data by a transmitting end to receiving the data by a receiving end in a communication system, and includes a transmission latency, a processing latency, a queuing latency, and the like. In different communication application scenarios, latency requirements are different. For example, for a VoIP call, real-time communication needs to be implemented within a latency of dozens of milliseconds, while a latency for an email may be within several minutes or hours.

The computing latency requirement is time from receiving a request to returning a response in a computing system, including processing time, storage time, transmission time, and the like. In different computing application scenarios, computing latency requirements are also different. For example, for high-frequency transaction, computing needs to be completed within milliseconds or microseconds, while for a cloud game, computing needs to be completed within dozens of milliseconds.

Therefore, the latency requirement and the computing latency requirement are both indicators for measuring time, but are used for different objects and application scenarios. The latency requirement is mainly related to the communication system, and the computing latency requirement is mainly related to the computing system.

Similarly, the QoS requirement and the computing QoS requirement are both related to quality of service, but have different meanings.

The QoS requirement means that, in the network, different applications and services have different processing priorities and quality of service requirements, and therefore, different QoS classes need to be allocated to the applications and services to ensure that transmission and processing of the applications and services in the network can be provided with corresponding priorities and guarantees. In different network application scenarios, QoS requirements are different. For example, a VoIP call needs a high priority and a low latency, while file downloading needs a low priority and high bandwidth.

The computing QoS requirement means that, in the computing system, different applications and services have different processing priorities and quality of service requirements, and therefore, different computing resources and quality of service guarantees need to be allocated to the different applications and services based on application characteristics and user requirements, to ensure performance and user experience of the computing system. In different computing application scenarios, computing QoS requirements are also different. For example, high-frequency transaction needs short response time and good concurrency performance, while big data analysis needs high fault tolerance and good-performance computing capabilities.

Therefore, the QoS requirement and the computing QoS requirement are both indicators for measuring quality of service, but are used for different objects and application scenarios. The QoS requirement is mainly related to a network system, and the computing QoS requirement is mainly related to the computing system.

### (b) Resource position parameter

The resource position parameter may include one or more of the following parameters: start time, CPU ID, and CPU type (for example, CPU/NPU/GPU).

Start time of a computing power resource is time at which the computing power resource starts to be available. If the start time of the computing power resource is late, a task may not be completed on time, affecting normal running of a service. If the start time of the computing power resource is early, completion efficiency of a computing task can be improved, and execution time of the task can be shortened, thereby improving efficiency and a benefit of the service. Therefore, when a computing power resource is requested and allocated, available time of the computing power resource needs to be considered for appropriately planning and allocating computing tasks.

### (c) Resource size parameter

The resource size parameter may be any one of parameters such as computing amount and duration. It should be understood that a specific type of the resource size parameter may be flexibly adjusted based on a specific scenario.

A resource size may be represented as computing duration (computing duration=computing amount/computing capability of the UE), for example, xx milliseconds; or a resource size is represented as a computing amount, for example, xx flops.

Note: flops stands for "floating-point operations per second" or "peak speed per second", and is short for floating-point operations per second (floating-point operations per second).

### (2) Periodic computing power resource

When the computing power resource requested by the UE from the network is a periodic computing power resource, the computing power request information may carry one or more of the following parameters: QoS parameter, resource position parameter, and resource size parameter.

### (a) QoS parameter

Same as that of the one-time computing power resource, the QoS parameter includes latency requirement (which is a computing latency requirement) and reliability requirement (which is a computing QoS requirement).

### (b) Resource position parameter

Same as that of the one-time computing power resource, the resource position parameter includes start time, CPU ID, CPU type, and the like. In addition, a description parameter for a periodic attribute (for example, period size and total quantity of periods) is further needed.

### (c) Resource size parameter

A resource size parameter of the periodic computing power resource corresponds to a size of each resource in the periodic resource. The resource size parameter may be any one of parameters such as computing amount and duration. It should be understood that a specific type of the resource size parameter may be flexibly adjusted based on a specific scenario.

In this embodiment of this application, there is a triggering mechanism and a cancellation mechanism for sending the computing power request information by the UE. An example in which the computing power request information is a C-BSR is used below to describe a triggering mechanism and a cancellation mechanism of the C-BSR.

### Triggering mechanism:

C-BSR reporting may be triggered periodically or triggered based on an event.

For periodic triggering, the UE periodically detects whether there is a computing power resource request, and sends the computing power request information when there is a computing power resource request. Specifically, the network may configure a triggering period and/or start time of the C-BSR for the UE (for example, the period being 10 ms, and starting at 0 ms). A UE side starts a corresponding timer, and checks whether there is a C-BSR sending requirement every 10 ms (if there is a computing power request primitive transferred by an upper layer, it is considered that there is a requirement; or if there is no computing power request primitive transferred by an upper layer, there is no requirement). If there is no sending requirement, the C-BSR is not sent.

For event triggering, the network may configure a triggering condition of the C-BSR for the UE. The MAC layer of the UE detects when an event meets a sending condition. When the sending condition is met, sending of the C-BSR is triggered. When the sending condition is not met, sending of the C-BSR is not triggered. The event may be any combination of the following conditions:
(1) A total quantity of computing power resource requests is greater than a first value.
(2) A quantity of computing power resource requests is greater than a second value.
(3) A minimum latency of a computing power resource request is less than a third value.
(4) A minimum value of a remaining latency of a computing power resource request is less than a fourth value.

It should be understood that the first value, the second value, the third value, and the fourth value are preset values preconfigured by the network for the UE.

### Cancellation mechanism:

Scenario 1: When the UE have previously requested computing power, and subsequently does not have the requirement, but a previous C-BSR has been generated and has been sent or has not been sent to the network (this is because sending of the C-BSR also needs the network to schedule an uplink transmission resource for the UE, and if the scheduling for the UE is not performed in time, the C-BSR cannot be sent in time), the network needs to be notified in time that the UE does not have the requirement.

Scenario 2: When the UE has a computing power request requirement, a lower layer has been notified, and a corresponding C-BSR (has been sent or has not been sent) has been generated, but the network allocates a computing power resource to the UE in a pre-determining or reservation manner, the generated C-BSR (has been sent or has not been sent) needs to be canceled.

The following separately discusses two cases in which the C-BSR has not been sent or has been sent.
(1) The C-BSR has not been sent: For the C-BSR in the manner which the computing power resource requests are not merged (the computing power resource request is mapped to the computing power request information in a 1:1 manner), the C-BSR is directly canceled. For the C-BSR in the manner in which the computing power resource requests are merged (the computing power resource request is mapped to the computing power request information in an N:1 manner), there are two approaches: (a) directly updating a total quantity of requirements, generating a latest C-BSR, and deleting a previous C-BSR; and (b) not directly canceling a previous C-BSR, but generating a new C-BSR, where the new C-BSR carries a quantity of cancelled requirements (for example, identified by using a negative value).
(2) The C-BSR has been sent: In this case, a C-BSR for canceling may be generated (for example, a quantity of canceled computing power resources is identified by using a negative value).

In the foregoing embodiment, a solution in which the UE applies to the network for the computing power resource by using the computing power request information in a form of the RRC signaling or the MAC CE (for example, the C-BSR) is provided.

When the MAC CE needs to be used to request computing power from the network, the C-BSR and the like need to be used. However, a prerequisite for sending the C-BSR is that the UE has an uplink transmission resource allocated by the network (that is, has a UL grant). In some cases, because the UE side does not have the UL grant, the C-BSR cannot be sent. In this case, a corresponding mechanism is needed for the UE to first notify the network that there is uplink data to be sent. In an existing communication network, this is implemented by using a scheduling request (Scheduling Request, SR) mechanism.

In the existing network, an SR is a resource on a physical uplink control channel (Physical Uplink Control Channel, PUCCH), and is preconfigured (for example, periodically) by a network for a UE. When the UE has uplink data to be sent but does not have a UL grant, the SR is first triggered to notify the network, and then the network allocates a small UL grant to the UE, where the small UL grant is used for transmission of a MAC CE (for example, a BSR), to notify the network of an amount of to-be-sent data at a UE side. After receiving the BSR sent by the UE, the network allocates a corresponding UL grant based on a specific amount of data, and then the UE sends the uplink data by using the UL grant allocated at the 2^{nd} time.

However, in some cases, the UE side has no SR resource (this is because whether to configure the SR resource is optional, and the network is not forced to configure the SR resource for the UE), or the SR resource on the UE side is invalid (for example, the SR resource configured by the network for the UE is time-constrained, for example, is valid within 100 ms; or the UE is out of synchronization in uplink, and in this case, even if there is a valid SR resource, the SR resource cannot be used). In this case, the UE can only notify the network in a random access manner first.

For the foregoing descriptions, in an existing communication system, there are three manners in which the UE reports uplink data transmission amount to the network: a BSR (for example, a C-BSR) manner, an SR manner, and a RACH manner. A use order is as follows: a BSR takes precedence over an SR, and the SR takes precedence over a RACH, as shown in FIG. 7.

The following describes a method in which a UE requests a computing power resource from a network side in an SR manner.

For sending of computing power request information, an existing SR resource for data transmission may be used, or a dedicated SR resource may be allocated to the computing power request information.

In a possible implementation, the existing SR resource for data transmission may be used to request computing power, in other words, a computing power request and a data transmission request share one or more sets of SR resources. When the UE sends the computing power request information to the network side in an SR manner, a specific QoS class and/or request type (for example, a computing power request or a UL grant request) may be carried in the SR, so that the network side learns that a request sent by the UE is a computing power request and learns of the specific QoS class.

In another possible implementation, a set of dedicated SR resources may be allocated to the computing power request information, so that the network side more conveniently learns that a request carried in the SR resource is a computing power request rather than a data transmission request. The dedicated SR resource is different from a common SR resource for data transmission, and is used only for requesting computing power and is not used for another purpose. When the UE sends the computing power request information by using the dedicated SR resource, the network side may learn, by using the dedicated SR resource, that a request sent by the UE is a computing power request.

In still another possible implementation, for a computing power request requirement, different services of a same UE have different QoS priorities for a computing power requirement. In the foregoing solution, the network side may learn, by using the dedicated SR resource, that the request sent by the UE is a computing power request, but cannot obtain a QoS priority of the computing power request by using the dedicated SR resource. A plurality of sets of dedicated SR resources may be configured for the UE, and different SR resources are used to correspond to computing power requests of different QoS requirements, so that the network side distinguishes between the computing power requests of different QoS requirements.

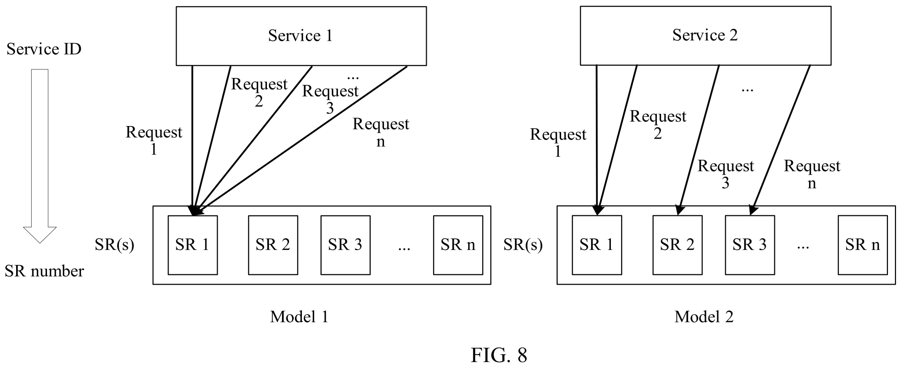

As shown in FIG. 8, there are two different modelings for a plurality of computing power request requirements of a same service ID.
(1) Model 1: For a same service ID, QoS requirements of different computing power requests are similar or the same.

In this case, for a same service ID, QoS requirements of a plurality of computing power requests differ slightly, and QoS requirements of computing power requests from a same service may be considered to be the same. Therefore, the network may preconfigure a mapping relationship between a service ID and an SR index for the UE.

Specifically, related configurations of the model 1 are as follows:

### (a): SR resource configuration

The computing power request information needs a dedicated SR resource, to be specific, the network side configures different SR resources, such as an SR resource 1 and an SR resource 2, based on a resource status in a system.

In the model 1, a static SR resource configuration manner may be used, to be specific, a dedicated SR resource is allocated for computing power request information of a specific service, and the service corresponds to the SR resource. In other words, when a specific service needs computing power, an SR resource corresponding to the specific service is used to send computing power request information corresponding to the service.

### (b): Binding relationship

The SR index is bound to the service ID to distinguish between QoS classes of different services. Because QoS requirements of computing power requests from a same service may be considered to be the same, after being bound to the service ID, the SR index is also bound to a QoS class corresponding to the service.

Specifically, the network side needs to configure a correspondence between the service ID and the SR resource.

Optionally, the SR resource is in one-to-one correspondence with the service. For example, an SR resource 1 corresponds to a service 1, and an SR resource 2 corresponds to a service 2.

Optionally, a plurality of services with similar QoS requirements may correspond to a same SR resource. For example, an SR resource 1 corresponds to a service 1, an SR resource 2 corresponds to a service 2 and a service 3, and an SR resource 3 corresponds to a service 4 and a service 5.

### (c): Trigger condition

When there is no CPU resource, or when there is a CPU resource but the CPU resource does not meet a QoS requirement (for example, a latency or size requirement), sending of an SR is triggered.

In a solution corresponding to the model 1, the UE may trigger, based on different services, SR resources corresponding to different computing power requests. After receiving a corresponding SR resource, the network may indirectly obtain that the request is a computing power resource request (rather than a request for an uplink data transmission resource), and obtain a corresponding QoS requirement class (different services and QoS classes thereof correspond to different SR resources).

(2) Model 2: For a same service ID, QoS requirements of different computing power requests are different or differ greatly.

In this case, for a same service ID, QoS requirements of different computing power requests differ greatly. Therefore, an SR resource cannot be bound to a service in a manner of the model 1. Instead, the SR resource needs to be bound to a QoS requirement class which is at a finer granularity. In other words, the network may preconfigure a mapping relationship between a QoS class and an SR index for the UE.

Specifically, related configurations of the model 2 are as follows:

### (a): SR resource configuration

The computing power request information needs a dedicated SR resource, to be specific, the network side configures different SR resources, such as an SR resource 1 and an SR resource 2, based on a resource status in a system.

Similar to the model 1, in the model 2, the static SR resource configuration manner may also be used, to be specific, a dedicated SR resource is allocated for computing power request information of a specific QoS class, and the QoS class of the computing power request corresponds to the SR resource. In other words, when a request of a specific QoS class needs computing power, an SR resource corresponding to the QoS class is used to send computing power request information corresponding to the service.

In another possible implementation, a set of default SR resources may be additionally configured. For a computing power request for which no mapping relationship between a QoS class and an SR resource is explicitly configured, the request is sent by using the SR resource.

### (b): Binding relationship

The SR index is bound to the QoS class. Different requests of the service have different QoS classes, and different QoS classes may correspond to different SR resources.

Specifically, the network side needs to configure a correspondence between the QoS class and the SR resource.

Optionally, the SR resource is in one-to-one correspondence with the QoS class. For example, an SR resource 1 corresponds to a QoS class 1, and an SR resource 2 corresponds to a QoS class 2.

Optionally, a plurality of similar QoS classes may correspond to a same SR resource. For example, an SR resource 1 corresponds to a QoS class 1, an SR resource 2 corresponds to a QoS class 2 and a QoS class 3, and an SR resource 3 corresponds to a QoS class 4 and a QoS class 5.

### (c): Service QoS generation

Service QoS is generated by an upper layer of the UE and sent to a lower layer through a primitive. The service QoS can be left for the UE to implement a mapping rule or left for the network to configure a mapping rule for the UE.

### (d): Trigger condition

When there is no CPU resource, or when there is a CPU resource but the CPU resource does not meet a QoS requirement (for example, a latency or size requirement), sending of an SR is triggered.

In a solution corresponding to the model 2, the UE may trigger, based on different QoS requirements of the service, SR resources corresponding to different computing power requests. After receiving a corresponding SR resource, the network may indirectly obtain that the request is a computing power resource request (rather than a request for an uplink data transmission resource), and obtain a corresponding QoS class (different QoS classes correspond to different SR resources).

In addition, regardless of the model 1 or the model 2, QoS requirements of computing power requests of different service IDs may be the same, or may differ greatly.

When no SR resource is available, the UE needs to request a computing power resource in a RACH manner. The following describes a method in which the UE requests a computing power resource from the network side in the RACH manner.

When the UE requests the computing power resource in the RACH manner, similarly, the computing power request information may be sent by using a RACH resource.

Similar to the SR manner, for sending of computing power request information, an existing RACH resource for data transmission may be used, or a dedicated RACH resource may be allocated to the computing power request information.

In a possible implementation, the existing RACH resource that is common to a network/cell and that is for data transmission may be used to perform RACH access and request computing power in a contention manner. In this case, a computing power request and a data transmission request share one or more sets of RACH resources. Therefore, when the UE sends the computing power request information to the network side in a RACH manner, a specific QoS class and/or request type (for example, a computing power request or a UL grant request) may be carried in a RACH message, so that the network side learns that a request sent by the UE is a computing power request and learns of the specific QoS class.

In another possible implementation, a set of dedicated RACH resources may be allocated to the computing power request information, so that the network side more conveniently learns that a request carried in the RACH resource is a computing power request rather than a data transmission request. The dedicated RACH resource is different from a common RACH resource for data transmission, and is used only for requesting computing power and is not used for another purpose. When the UE sends the computing power request information by using the dedicated RACH resource, the network side may learn, by using the dedicated RACH resource, that a request sent by the UE is a computing power request.

In still another possible implementation, for a computing power request requirement, different services of a same UE have different QoS priorities for a computing power requirement. In the foregoing solution, the network side may learn, by using the dedicated RACH resource, that the request sent by the UE is a computing power request, but cannot obtain a QoS priority of the computing power request by using the dedicated RACH resource. A plurality of sets of dedicated RACH resources may be configured for the UE, and different RACH resources are used to correspond to computing power requests of different QoS requirements, so that the network side distinguishes between the computing power requests of different QoS requirements.

Similar to sending the computing power request information through the SR, there are also two different modelings for a plurality of computing power request requirements of a same service ID.

Model 1: For a same service ID, QoS requirements of different computing power requests are similar or the same.

In this case, for a same service ID, QoS requirements of a plurality of computing power requests differ slightly, and QoS requirements of computing power requests from a same service may be considered to be the same. Therefore, the network may preconfigure, for the UE, a mapping relationship between the service ID and a preamble ID of the RACH resource.

Specifically, related configurations of the model 1 are as follows:

### (a): RACH resource configuration

The computing power request information needs a dedicated RACH resource, to be specific, the network side configures different RACH resources, such as a RACH resource 1 and a RACH resource 2, based on a resource status in a system.

In the model 1, a static RACH resource configuration manner may be used, to be specific, a dedicated RACH resource is allocated for computing power request information of a specific service. In other words, a service may correspond to a preamble ID of the RACH resource. To be specific, when a specific service needs computing power, a RACH resource corresponding to the specific service is used to send computing power request information corresponding to the service.

### (b): Binding relationship

The preamble ID is bound to the service ID to distinguish between QoS classes of different services. Because QoS requirements of computing power requests from a same service may be considered to be the same, after being bound to the service ID, the preamble ID is also bound to a QoS class corresponding to the service.

Specifically, the network side needs to configure a correspondence between the service ID and the RACH resource.

Optionally, the RACH resource is in one-to-one correspondence with the service. For example, a RACH resource 1 corresponds to a service 1, and a RACH resource 2 corresponds to a service 2.

Optionally, a plurality of services with similar QoS requirements may correspond to a same RACH resource. For example, a RACH resource 1 corresponds to a service 1, a RACH resource 2 corresponds to a service 2 and a service 3, and a RACH resource 3 corresponds to a service 4 and a service 5.

In a solution corresponding to the model 1, the UE may trigger, based on different services, preamble IDs corresponding to different computing power requests. After receiving a RACH resource corresponding to the preamble ID, the network may indirectly obtain that the request is a computing power resource request (rather than a request for an uplink data transmission resource), and obtain a corresponding QoS requirement class (different services and QoS classes thereof correspond to different preamble IDs).

Model 2: For a same service ID, QoS requirements of different computing power requests are different or differ greatly.

In this case, for a same service ID, QoS requirements of different computing power requests differ greatly. Therefore, a RACH resource cannot be bound to a service one by one in a manner of the model 1. Instead, the RACH resource needs to be bound to a QoS requirement class which is at a finer granularity. In other words, the network may preconfigure a mapping relationship between a QoS class and a preamble ID for the UE.

Specifically, related configurations of the model 2 are as follows:

### (a): RACH resource configuration

The computing power request information needs a dedicated RACH resource, to be specific, the network side configures different RACH resources, such as a RACH resource 1 and a RACH resource 2, based on a resource status in a system.

Similar to the model 1, in the model 2, the static RACH resource configuration manner may also be used, to be specific, a dedicated RACH resource is allocated for computing power request information of a specific QoS class. In addition, the QoS class of the computing power request corresponds to the RACH resource. In other words, when a request of a specific QoS class needs computing power, a RACH resource corresponding to the QoS class is used to send computing power request information corresponding to the service.

In another possible implementation, a set of default RACH resources may be additionally configured. For a computing power request for which no mapping relationship between a QoS class and a RACH resource is explicitly configured, the request is sent by using the RACH resource.

### (b): Binding relationship

The preamble ID is bound to the QoS class, and different requests of the service have different QoS classes. Therefore, computing power requests of different QoS classes may correspond to different RACH resources.

Specifically, the network side needs to configure a correspondence between the QoS class and the RACH resource.

Optionally, the RACH resource is in one-to-one correspondence with the QoS class. For example, a RACH resource 1 corresponds to a QoS class 1, and a RACH resource 2 corresponds to a QoS class 2.

Optionally, a plurality of similar QoS classes may correspond to a same RACH resource. For example, a RACH resource 1 corresponds to a QoS class 1, a RACH resource 2 corresponds to a QoS class 2 and a QoS class 3, and a RACH resource 3 corresponds to a QoS class 4 and a QoS class 5.

In a solution corresponding to the model 2, the UE may trigger, based on different QoS requirements of the service, RACH resources corresponding to different computing power requests. After receiving a corresponding RACH resource, the network may indirectly obtain that the request is a computing power resource request (rather than a request for an uplink data transmission resource), and obtain a corresponding QoS class (different QoS classes correspond to different SR resources).

The following describes a procedure of requesting a computing power resource in a RACH manner.

### (a): RACH triggering

When a service ID has no valid SR (for example, is not configured with an SR, or is configured with an SR, but the SR does not meet a latency requirement or is prohibited from being frequently sent), a RACH is triggered.

### (b): RACH procedure

The RACH process reuses a RACH procedure in existing 5G communication, and mainly includes the following steps:
1. Random access signal sending: A mobile device or a terminal sends a random access signal including a preamble (Random Access Preamble) on the RACH. Sending time of the random access signal and the preamble are randomly selected. The random access signal usually includes a plurality of subcarriers, and there is a preamble on each subcarrier, where the preamble is used to distinguish between different mobile devices or terminals.
2. Access response waiting: After receiving the random access signal, a network sends an access response (Random Access Response) to the mobile device or the terminal, where the access response includes a random access response preamble and some other information. The mobile device or the terminal needs to wait for a period of time to receive the access response, and the time is usually preset by the network.
3. Random access response sending: After receiving the access response, the mobile device or the terminal needs to send a random access response signal on the RACH, where the random access response signal includes an access response preamble and some other information. The random access response signal usually includes a plurality of subcarriers, and there is a preamble on each subcarrier, where the preamble is used to acknowledge that the mobile device or the terminal has successfully accessed the network.
4. Access acknowledgment: After receiving the random access response signal, the network sends an access acknowledgment (Random Access Completion) to the mobile device or the terminal, to acknowledge that the mobile device or the terminal has successfully accessed the network.

In conclusion, the RACH procedure is mainly a procedure in which the mobile device or the terminal initiates an initial access request to the network, and includes sending of the random access signal, waiting for the access response, sending of the random access response, and final acknowledgment of the access acknowledgment. This procedure usually depends on some specific resources and algorithms, for example, allocation and identification of a preamble, allocation and scheduling of an access response, to implement efficient and reliable data transmission and communication connection.

In S330, the network device determines the allocation result information, where the allocation result information indicates the allocation status of the computing power resource. In S340, the network device sends the allocation result information and the computing power configuration information to the UE.

In the foregoing solution, the UE sends the computing power request information to the network device to request to allocate the computing power resource.

In a possible implementation, the computing power request information includes first parameter information, and the first parameter information indicates at least one of a size, a position, and a QoS requirement of each computing power resource in the computing power resources.

After receiving the computing power request information, the network device determines the allocation result information based on the computing power request information, where the allocation result information indicates the allocation status of the computing power resource requested to be allocated by using the computing power request information. Specifically, the allocation result information may indicate the allocation status (for example, success, failure, partial success+partial failure) of the requested computing power resource.

In a possible implementation, when a part of or all requested computing power resources are successfully allocated, the network device determines the computing power configuration information, where the computing power configuration information includes configuration information of a part of or all the computing power resources.

In another possible implementation, the allocation result information includes the computing power configuration information.

In a possible implementation, for a scenario in which computing power allocation fails, the allocation result information may further carry a failure cause (for example, a QoS requirement is not met, load is excessively heavy, a CPU ID is invalid, or a CPU type is not supported).

The network device allocates the computing power resource to the UE by using the allocation result information or the independent computing power configuration information.

Specifically, allocation may be performed by using an independent RRC/MAC message, or may be performed in a combination manner (for example, RRC configuration+MAC/PHY activation). Regardless of which manner is used, carried information are as follows.

### (1) Periodic resource (Configured Computing Grant, CCG)

CCG parameter: includes one or more of the following parameters: CPU id, CPU slot id, start offset, CCG period, and CCG bitmap.

CPU slot: is a slot (slot) for processing control signaling in a communication system, and mainly provides control and management functions for the communication system, for example, resource allocation, data transmission scheduling, a user equipment coordination, and system status maintenance. A quantity of CPU slots and an allocation manner of the CPU slot are determined during system design and deployment, and are adjusted and optimized based on network load and communication requirements, to improve system efficiency and performance. CPU slot request is usually a process in which the mobile device or the terminal initiates a control signaling request to the network. A main purpose of the CPU slot request is to obtain a CPU slot resource for control signaling processing and resource management.

Start offset: is a 1^{st} position of the periodic resource, and usually is a 1^{st} position or a start position of a resource (for example, a slot or a chip) that is periodically allocated and used. In the communication system, the 1^{st} position of the periodic resource is usually determined during system design, and is adjusted and optimized based on different communication requirements and network load. For example, in a TDMA system, a slot is a periodic resource, and a 1^{st} position of the slot is usually a fixed time point, for example, system startup time or frame synchronization time. Duration and a position of each slot are also fixed. In a CDMA system, a chip is a periodic resource, and a 1^{st} position of the chip is usually a fixed chip sequence, for example, a Walsh code sequence. A length and a position of each chip are also fixed. When the periodic resource is allocated and used, the system usually needs to consider factors such as resource utilization, a latency, and a throughput, to ensure efficiency and performance of the system.

The CCG period (period) is a period size, and is a length or a capacity of the resource in a complete period. For example, for a slot resource, a period size of the slot resource is usually a complete frame period, to be specific, a plurality of slots are combined into one frame, and a length of the frame is usually fixed. For a chip resource, a period size of the chip resource is usually a complete chip sequence period, to be specific, a plurality of chips are combined into one chip sequence, and a length of the chip sequence is usually fixed.

CCG bitmap (bitmap): is a grant (grant) position, may be in a form of a bitmap or duration (Duration), and is measured in time (ms, where an SFN is a reference value; or CPU slots) or frequency (Hz).

A bitmap is a graphical data structure that represents a periodic resource allocation status, and is usually used to describe an allocation status of the periodic resource in a complete period. The bitmap usually includes a group of binary bits, and each binary bit represents a position or a slot of a periodic resource, where 0 indicates that the position or the slot is not allocated, and 1 indicates that the position or the slot is allocated. For example, for a slot resource, a bitmap usually includes a group of binary bits, and each binary bit represents an allocation status of a slot, where 0 indicates that the slot is not allocated, and 1 indicates that the slot is allocated. For a chip resource, a bitmap usually includes a group of binary bits, and each binary bit represents an allocation status of a chip, where 0 indicates that the chip is not allocated, and 1 indicates that the chip is allocated. The bitmap may be used to quickly describe and query the allocation status of the periodic resource.

### (2) One-time resource (Dynamic Computing Grant, DCG)

Similar to the CCG, the DCG includes one or more of the following parameters: a CPU id, a CPU slot id, and the like.

In a possible implementation, the network device further sends resource constraint information to the UE.

In another possible implementation, the computing power configuration information further includes resource constraint information.

Resource constraint information: is a constraint relationship between a resource and a service, and indicates that a part of the computing power resource is allowed to be used for only a part of services, or a part of the computing power resource is not allowed to be used for a part of services. For example, computing power resources include a computing power resource 1, a computing power resource 2, and another computing power resource.

In a possible implementation, the resource constraint information indicates that the computing power resource 1 can be used only for a service 1, and the computing power resource 2 can be used only for a service 2.

In another possible implementation, the resource constraint information indicates that the computing power resource 1 cannot be used for a service 1, and the computing power resource 2 cannot be used for the service 1 and a service 2.

Optionally, the resource constraint information includes a binding relationship between a service and a computing power resource: {service id/service group ID, computing power resource id}. To be specific, different computing power resources may correspond to different services or service groups, and a specific computing power resource can be used only for one or more corresponding services or service groups.

In a possible implementation, the network needs to configure a binding relationship between a computing power resource and a service ID/service group ID for the UE.

From a perspective of the UE side, when there is a computing power resource (for example, a CPU time slice), whether there is a preconfigured constraint relationship needs to be determined. If there is a constraint relationship, the resource can only be scheduled for a service ID that is allowed to use the resource.

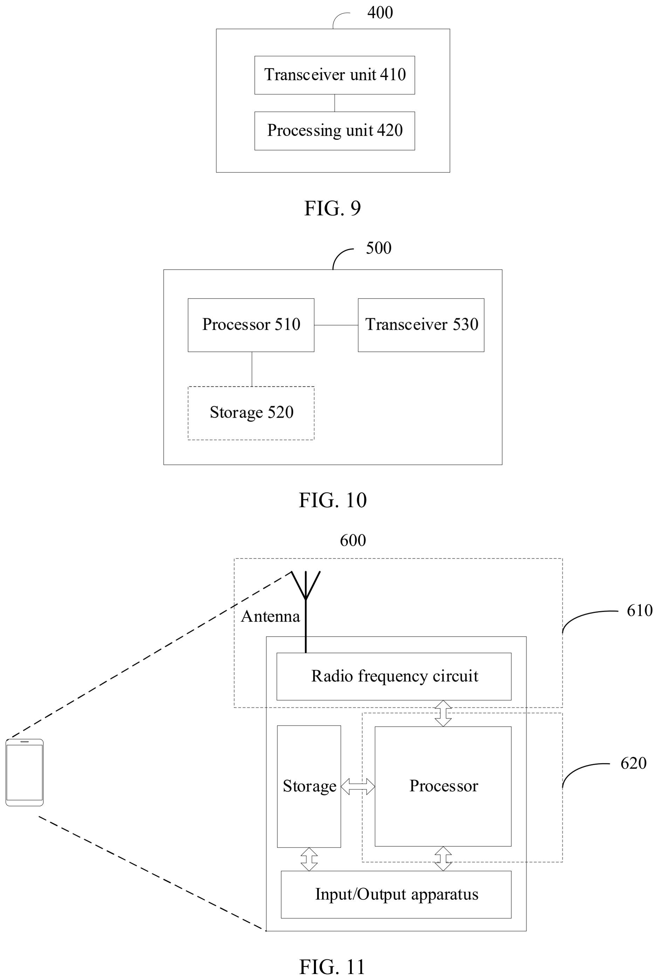

FIG. 9 is a block diagram of a communication apparatus 400 according to an embodiment of this application. The apparatus 400 includes a transceiver unit 410 and a processing unit 420. The transceiver unit 410 may communicate with the outside, and the processing unit 420 is configured to perform data processing. The transceiver unit 410 may also be referred to as a communication interface or a communication unit.

In a possible implementation, the apparatus 400 may further include a storage unit. The storage unit may be configured to store instructions and/or data. The processing unit 420 may read the instructions and/or the data in the storage unit.

The apparatus 400 may be configured to perform actions performed by the network device in the foregoing method embodiments. In this case, the apparatus 400 may be a network device or a component that may be configured in the network device. The transceiver unit 410 is configured to perform receiving and sending related operations on a network device side in the foregoing method embodiments. The processing unit 420 is configured to perform processing related operations on a network device side in the foregoing method embodiments.

Alternatively, the apparatus 400 may be configured to perform actions performed by the terminal device in the foregoing method embodiments. In this case, the apparatus 400 may be a terminal device or a component that may be configured in the terminal device. The transceiver unit 410 is configured to perform receiving and sending related operations on a terminal device side in the foregoing method embodiments. The processing unit 420 is configured to perform processing related operations on a terminal device side in the foregoing method embodiments.

As shown in FIG. 10, an embodiment of this application further provides a communication apparatus 500. The communication apparatus 500 includes a processor 510. The processor 510 is coupled to a storage 520. The storage 520 is configured to store a computer program or instructions and/or data. The processor 510 is configured to execute the computer program or the instructions and/or the data stored in the storage 520, so that the method in the foregoing method embodiments is performed.

In a possible implementation, the communication apparatus 500 includes one or more processors 510.

In a possible implementation, as shown in FIG. 10, the communication apparatus 500 may further include the storage 7520.

In a possible implementation, the communication apparatus 500 may include one or more storages 520.

In a possible implementation, the storage 520 and the processor 510 may be integrated together, or disposed separately.

In a possible implementation, as shown in FIG. 10, the wireless communication apparatus 500 may further include a transceiver 7530. The transceiver 530 is configured to receive and/or send a signal. For example, the processor 510 is configured to control the transceiver 530 to receive and/or send a signal.

In a solution, the communication apparatus 500 is configured to implement operations performed by the network device in the foregoing method embodiments.

For example, the processor 510 is configured to implement processing related operations performed by the network device in the foregoing method embodiments, and the transceiver 530 is configured to implement receiving and sending related operations performed by the network device in the foregoing method embodiments.

In another solution, the communication apparatus 500 is configured to implement operations performed by the terminal device in the foregoing method embodiments.

For example, the processor 510 is configured to implement processing related operations performed by the terminal device in the foregoing method embodiments, and the transceiver 530 is configured to implement receiving and sending related operations performed by the terminal device in the foregoing method embodiments.

An embodiment of this application further provides a communication apparatus 600. The communication apparatus 600 may be a terminal device or may be a chip. The communication apparatus 600 may be configured to perform an operation performed by the terminal device in the foregoing method embodiments. When the communication apparatus 600 is a terminal device, FIG. 11 is a simplified diagram of a structure of the terminal device. For ease of understanding and illustration, an example in which the terminal device is a mobile phone is used in FIG. 11. As shown in FIG. 11, the terminal device includes a processor, a storage, a radio frequency circuit, an antenna, and an input/output apparatus. The processor is mainly configured to: process a communication protocol and communication data, control the terminal device, execute a software program, process data of a software program, and the like. The storage is mainly configured to store a software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 shows only one storage and one processor. In an actual terminal device product, there may be one or more processors and one or more storages. The storage may also be referred to as a storage medium, a storage device, or the like. The storage may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 11, the terminal device includes a transceiver unit 610 and a processing unit 620. The transceiver unit 610 may also be referred to as a transceiver, a transceiver machine, a transceiver apparatus, or the like. The processing unit 620 may also be referred to as a processor, a processing board, a processing module, a processing apparatus, or the like.

In a possible implementation, a component that is in the transceiver unit 610 and that is configured to implement a receiving function may be considered as a receiving unit, and a component that is in the transceiver unit 610 and that is configured to implement a sending function may be considered as a sending unit. In other words, the transceiver unit 610 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, in an implementation, the transceiver unit 610 is configured to perform a receiving operation of the terminal device. The processing unit 620 is configured to perform a processing action on the terminal device side.

It should be understood that FIG. 11 is merely an example but not a limitation. The terminal device including the transceiver unit and the processing unit may not depend on the structure shown in FIG. 11.

When the communication apparatus 600 is a chip, the chip includes a transceiver unit and a processing unit. The transceiver unit may be an input/output circuit or a communication interface. The processing unit may be a processor, a microprocessor, or an integrated circuit integrated on the chip. The input circuit may be an input pin, the output circuit may be an output pin, and a processing circuit may be a transistor, a gate circuit, a trigger, various logic circuits, or the like. An input signal received by the input circuit may be received and input by, for example, but not limited to, a receiver, and a signal output by the output circuit may be output to and transmitted by, for example, but not limited to, a transmitter. The input circuit and the output circuit may be different circuits or may be a same circuit, and in this case, the circuit is used as the input circuit and the output circuit respectively at different moments.

An embodiment of this application further provides a communication apparatus 700. The communication apparatus 700 may be a network device or a chip. The communication apparatus 700 may be configured to perform an operation performed by the network device in the foregoing method embodiments.

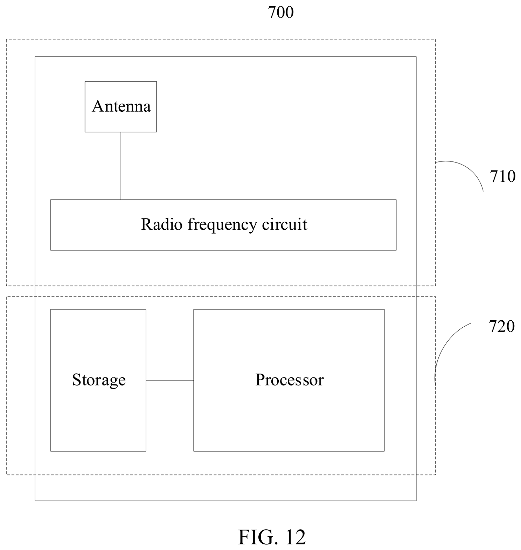

When the communication apparatus 700 is a network device, FIG. 12 is a simplified diagram of a structure of a network device. The network device includes a part 710 and a part 720. The part 710 is mainly configured to: receive and send a radio frequency signal, and perform conversion between a radio frequency signal and a baseband signal. The part 720 is mainly configured to: perform baseband processing, control the network device, and the like. The part 710 may be usually referred to as a transceiver unit, a transceiver machine, a transceiver circuit, a transceiver, or the like. The part 720 is usually a control center of the network device, may be usually referred to as a processing unit, and is configured to control the network device to perform processing operations on the network device side in the foregoing method embodiments.

The transceiver unit of the part 710 may also be referred to as a transceiver machine, a transceiver, or the like, and includes an antenna and a radio frequency circuit. The radio frequency circuit is mainly configured to perform radio frequency processing. In a possible implementation, a component that is in the part 710 and that is configured to implement a receiving function may be considered as a receiving unit, and a component configured to implement a sending function may be considered as a sending unit. In other words, the part 710 includes the receiving unit and the sending unit. The receiving unit may also be referred to as a receiver machine, a receiver, a receive circuit, or the like. The sending unit may be referred to as a transmitter machine, a transmitter, a transmit circuit, or the like.

The part 720 may include one or more boards, and each board may include one or more processors and one or more storages. The processor is configured to read and execute a program in the storage to implement a baseband processing function and control the network device. If there are a plurality of boards, the boards may be interconnected with each other, to enhance a processing capability. In an optional implementation, the plurality of boards may share one or more processors, the plurality of boards share one or more storages, or the plurality of boards share one or more processors at the same time.

For example, in an implementation, the transceiver unit of the part 710 is configured to perform receiving and sending related steps performed by the network device in embodiments, and the part 720 is configured to perform processing related steps performed by the network device.

It should be understood that FIG. 12 is merely an example but not a limitation. The network device including the transceiver unit and the processing unit may not depend on the structure shown in FIG. 12.

When the communication apparatus 700 is a chip, the chip includes a transceiver unit and a processing unit. The transceiver unit may be an input/output circuit or a communication interface. The processing unit is a processor, a microprocessor, or an integrated circuit integrated on the chip. The input circuit may be an input pin, the output circuit may be an output pin, and a processing circuit may be a transistor, a gate circuit, a trigger, various logic circuits, or the like. An input signal received by the input circuit may be received and input by, for example, but not limited to, a receiver, and a signal output by the output circuit may be output to and transmitted by, for example, but not limited to, a transmitter. The input circuit and the output circuit may be different circuits or may be a same circuit, and in this case, the circuit is used as the input circuit and the output circuit respectively at different moments.

An embodiment of this application further provides a computer-readable storage medium, storing computer instructions for implementing the method performed by the terminal device or the method performed by the network device in the foregoing method embodiments.

For example, when a computer program is executed by a computer, the computer is caused to implement the method performed by the terminal device or the method performed by the network device in the foregoing method embodiments.

An embodiment of this application further provides a computer program product including instructions. When the instructions are executed by a computer, the computer is caused to implement the method performed by the terminal device or the method performed by the network device in the foregoing method embodiments.

An embodiment of this application further provides a communication system. The communication system includes the network device and the terminal device in the foregoing embodiments.

For explanations and beneficial effects of related content of any wireless communication apparatus provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

A specific structure of an execution entity of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be performed by a terminal device or a network device, or may be performed by a functional module that is in the terminal device or the network device and that can invoke a program and execute the program.

Aspects or features in embodiments of this application may be implemented as a method, an apparatus, or a product that uses standard programming and/or engineering technologies. As used herein, the term "product" may encompass a computer program accessible from any computer-readable device, carrier, or medium. For example, a computer-readable medium may include, but is not limited to: a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive).

The various storage media described herein may represent one or more devices and/or other machine-readable media for storing information. The term "machine-readable medium" may include, but is not limited to: radio channels and various other media that can store, include, and/or carry instructions and/or data.

It should be understood that, the processor mentioned in embodiments of this application may be a central processing unit (central processing unit, CPU), and may alternatively be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage mentioned in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (storage module) may be integrated into the processor.

It should further be noted that the storage described herein is intended to include, but is not limited to, these and any other appropriate type of storage.

A person of ordinary skill in the art may be aware that, in combination with the examples described in embodiments disclosed in this specification, units and algorithm steps may be implemented by electronic hardware or a combination of computer software and electronic hardware. Whether functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in embodiments of this application essentially, or a part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a portable hard drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in embodiments of this application shall fall within the protection scope of this application. Therefore, the protection scope of this application shall be subject to the protection scope of the claims.

## Claims

1. A computing power scheduling method, comprising:
obtaining, by a first device, a computing power resource request, wherein the computing power resource request is from an access stratum AS, a non-access stratum NAS, or an application layer of the first device; and
generating, by the first device, computing power request information based on the computing power resource request, wherein the computing power request information is used to request to allocate a computing power resource to the first device.

2. The method according to claim 1, wherein the method further comprises:
sending, by the first device, the computing power request information, wherein a manner of sending the computing power request information comprises AS signaling or NAS signaling, and the AS signaling comprises a scheduling request SR, a random access channel RACH, a buffer status report BSR, and radio resource control RRC signaling.

3. The method according to claim 1 or 2, wherein the method further comprises:
receiving, by the first device, allocation result information, wherein the allocation result information indicates an allocation result of the computing power resource requested to be allocated by using the computing power request information, and the allocation result comprises all successfully allocated, all unsuccessfully allocated, or partially successfully allocated.

4. The method according to any one of claims 1 to 3, wherein the method further comprises:
receiving, by the first device, computing power configuration information, wherein the computing power configuration information comprises configuration information of a computing power resource allocated by a network device to the first device, and the computing power resource allocated by the network device to the first device comprises a computing power resource of the first device and a computing power resource of the network device.

5. The method according to any one of claims 1 to 4, wherein generating, by the first device, the computing power request information based on the computing power resource request comprises:
when a preset parameter meets a corresponding preset condition, generating, by the first device, the computing power request information based on the computing power resource request, wherein the preset parameter comprises at least one of the following parameters: a detection result of periodically detecting whether there is a computing power resource request, a total quantity of computing power resources in a computing power resource request, a quantity of computing power resource requests, a minimum latency of a computing power resource request, and a minimum value of a remaining latency of a computing power resource request.

6. The method according to any one of claims 1 to 5, wherein when the computing power resource request is canceled, the method further comprises:
if the computing power request information has not been sent, canceling, by the first device, sending of the computing power request information; or
if the computing power request information has been sent, generating, by the first device, cancellation request information, and sending the cancellation request information, wherein the cancellation request information is used to request to cancel allocation of a first computing power resource, and the first computing power resource is an entire or a part of the computing power resource requested to be allocated by using the computing power request information.

7. The method according to any one of claims 2 to 6, wherein the computing power resource request is a computing power resource request from a first service, and the method further comprises:
determining, based on an identifier ID of the first service, the manner of sending the computing power request information.

8. The method according to any one of claims 2 to 7, wherein the method further comprises:
determining, based on a QoS requirement of the computing power resource corresponding to the computing power resource request, the manner of sending the computing power request information.

9. The method according to any one of claims 4 to 8, wherein the computing power configuration information comprises resource constraint information, and the resource constraint information indicates that a part of the computing power resource allocated by the network device to the first device is allowed to be used for only a part of services.

10. The method according to any one of claims 1 to 9, wherein the method further comprises:
obtaining, by the first device, a plurality of computing power resource requests; and
generating, by the first device, the computing power request information based on the plurality of computing power resource requests.

11. A computing power scheduling method, comprising:
receiving, by a network device, computing power request information, wherein the computing power request information is used to request to allocate a computing power resource to a first device;
determining, by the network device, allocation result information, wherein the allocation result information indicates an allocation result of the computing power resource requested to be allocated by using the computing power request information, and the allocation result comprises all successfully allocated, all unsuccessfully allocated, or partially successfully allocated; and
sending, by the network device, the allocation result information.

12. The method according to claim 11, wherein the method further comprises:
determining computing power configuration information, wherein the computing power configuration information comprises configuration information of a computing power resource allocated by the network device to the first device, and the computing power resource allocated by the network device to the first device comprises computing power resource of the first device and a computing power resource of the network device; and
sending, by the network device, the computing power configuration information.

13. The method according to claim 11 or 12, wherein the computing power configuration information comprises resource constraint information, and the resource constraint information indicates that a part of the computing power resource allocated by the network device to the first device is allowed to be used for only a part of services.

14. A computing power scheduling apparatus, comprising:
a processing module, configured to obtain a computing power resource request, wherein the computing power resource request is from an access stratum AS, a non-access stratum NAS, or an application layer of a first device, and
the processing module is further configured to generate computing power request information based on the computing power resource request, wherein the computing power request information is used to request to allocate a computing power resource to the first device.

15. The apparatus according to claim 14, wherein the apparatus further comprises:
a sending module, configured to send the computing power request information, wherein a manner of sending the computing power request information comprises AS signaling or NAS signaling, and the AS signaling comprises a scheduling request SR, a random access channel RACH, a buffer status report BSR, or radio resource control RRC signaling.

16. The apparatus according to claim 14 or 15, wherein the apparatus further comprises:
a receiving module, configured to receive allocation result information, wherein the allocation result information indicates an allocation result of the computing power resource requested to be allocated by using the computing power request information, and the allocation result comprises all successfully allocated, all unsuccessfully allocated, or partially successfully allocated.

17. The apparatus according to any one of claims 14 to 16, wherein the receiving module is further configured to receive computing power configuration information, wherein the computing power configuration information comprises configuration information of a computing power resource allocated by a network device to the first device, and the computing power resource allocated by the network device to the first device comprises a computing power resource of the first device and a computing power resource of the network device.

18. The apparatus according to any one of claims 14 to 17, wherein that the processing module is further configured to generate the computing power request information based on the computing power resource request comprises:
when a preset parameter meets a corresponding preset condition, the processing module is further configured to generate the computing power request information based on the computing power resource request, wherein the preset parameter comprises at least one of the following parameters: a detection result of periodically detecting whether there is a computing power resource request, a total quantity of computing power resources in a computing power resource request, a quantity of computing power resource requests, a minimum latency of a computing power resource request, and a minimum value of a remaining latency of a computing power resource request.

19. The apparatus according to any one of claims 14 to 18, wherein when the computing power resource request is canceled,
if the computing power request information has not been sent, the sending module cancels sending of the computing power request information; or
if the computing power request information has been sent, the processing module is further configured to generate cancellation request information, and the sending module is further configured to send the cancellation request information, wherein the cancellation request information is used to request to cancel allocation of a first computing power resource, and the first computing power resource is an entire or a part of the computing power resource requested to be allocated by using the computing power request information.

20. The apparatus according to any one of claims 15 to 19, wherein the computing power resource request is a computing power resource request from a first service, and the sending module is further configured to determine, based on an identifier ID of the first service, the manner of sending the computing power request information.

21. The apparatus according to any one of claims 15 to 20, wherein the sending module is further configured to determine, based on a QoS requirement of the computing power resource corresponding to the computing power resource request, the manner of sending the computing power request information.

22. The apparatus according to any one of claims 17 to 21, wherein the computing power configuration information comprises resource constraint information, and the resource constraint information indicates that a part of the computing power resource allocated by the network device to the first device is allowed to be used for only a part of services.

23. The apparatus according to any one of claims 14 to 22, wherein the processing module obtains a plurality of computing power resource requests, and generates the computing power request information based on the plurality of computing power resource requests.

24. A computing power scheduling apparatus, comprising:
a receiving module, configured to receive computing power request information, wherein the computing power request information is used to request to allocate a computing power resource to a first device;
a processing module, configured to determine allocation result information, wherein the allocation result information indicates an allocation result of the computing power resource requested to be allocated by using the computing power request information, and the allocation result comprises all successfully allocated, all unsuccessfully allocated, or partially successfully allocated; and
a sending module, configured to send the allocation result information.

25. The apparatus according to claim 24, wherein the processing module is further configured to determine computing power configuration information, wherein the computing power configuration information comprises configuration information of a computing power resource allocated by the network device to the first device, and the computing power resource allocated by the network device to the first device comprises a computing power resource of the first device and a computing power resource of the network device; and
the sending module is further configured to send the computing power configuration information.

26. The apparatus according to claim 24 or 25, wherein the computing power configuration information comprises resource constraint information, and the resource constraint information indicates that a part of the computing power resource allocated by the network device to the first device is allowed to be used for only a part of services.

27. A computer program product, wherein the computer program product comprises computer program code, and when the computer program code is run, an apparatus is caused to perform
the method according to any one of claims 1 to 10 or
the method according to any one of claims 11 to 13.

28. A computer-readable storage medium, wherein the computer-readable storage medium stores a computer program, and when the computer program is run,
an apparatus is caused to perform the method according to any one of claims 1 to 10 or
the method according to any one of claims 11 to 13.

29. A chip system, comprising a processor, configured to invoke a computer program from a storage and run the computer program,
to cause a communication apparatus on which the chip system is installed to perform the method according to any one of claims 1 to 10 or
the method according to any one of claims 11 to 13.

30. A communication system, comprising an electronic device and a network device, wherein the network device is configured to perform the method according to any one of claims 11 to 13, and the electronic device is configured to perform the method according to any one of claims 1 to 10.
